(19) Europäisches Patentamt
European Patent Office
Office européen des brevets

(11) **EP 4 345 341 A2**

## EUROPEAN PATENT APPLICATION

(12)

(43) Date of publication:
**03.04.2024 Bulletin 2024/14**

(21) Application number: **23198779.3**

(22) Date of filing: **21.09.2023**

(51) International Patent Classification (IPC):
**F16J 15/3244** (2016.01)     **B25J 9/10** (2006.01)
**F16H 1/32** (2006.01)

(52) Cooperative Patent Classification (CPC):
**F16J 15/3244; B25J 9/102; F16H 1/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022154776**

(71) Applicant: **Nabtesco Corporation**
**Tokyo 102-0093 (JP)**

(72) Inventors:
• **Harada, Ryohei**
  **Tokyo, 102-0093 (JP)**
• **Kamagata, Shuichi**
  **Tokyo, 102-0093 (JP)**
• **Yoto, Kaoru**
  **Tokyo, 102-0093 (JP)**

(74) Representative: **Grünecker Patent- und Rechtsanwälte**
**PartG mbB**
**Leopoldstraße 4**
**80802 München (DE)**

(54) **TRANSMISSION**

(57)     A transmission (100) according to the invention includes: a case (20); a carrier (30) housed inside the case (20) and configured to rotate relative to the case (20); and a seal mechanism (50) provided between the case (20) and the carrier (30). The seal mechanism (50) includes a seal lip portion (55) having a lip end (51) for sealing, the lip end (51) being in linear contact with an outer circumferential surface (30a) of the carrier (30) along a circumferential direction of the carrier (30).

FIG. 1

**Description**

### TECHNICAL FIELD

The present invention relates to a transmission.

### BACKGROUND

A speed reducer and a transmission includes a seal mechanism provided between a case and a carrier that rotate relative to each other.

### RELEVANT REFERENCE

### LIST OF RELEVANT PATENT LITERATURE

Patent Literature 1: Japanese Patent Application Publication No. 2015-083329

### SUMMARY

In recent years, the load on a transmission has been higher due to the increased rotation speed and higher temperatures resulting from high-speed operation. This causes an insufficient sealing performance between the case and the carrier, which was sufficient in the past.

One object of the present invention is to provide a transmission having an improved sealing performance.

(1) A transmission according to one aspect of the invention includes: a case; a carrier housed inside the case and configured to rotate relative to the case; and a seal mechanism provided between the case and the carrier. The seal mechanism includes a seal lip portion having a lip end for sealing, the lip end being in linear contact with an outer circumferential surface of the carrier along a circumferential direction of the carrier.

With the configuration as described in (1) above, the fluid feed rate accomplished by the seal mechanism can be increased even when the temperature of the transmission rises during high circumferential speed rotation. Thus, the sealing performance can be improved. When high-speed rotation is not reached, the temperature rise in the transmission is inhibited to such a degree as not to affect the sealing performance. Therefore, there is no need to use the seal mechanism of the invention to improve the sealing performance. The fluid feed rate refers to the amount of fluid fed by the seal mechanism from the atmospheric side outside the seal mechanism to the sealed side inside the seal mechanism while the carrier is rotating. In practice, the fluid feed rate is replaced with (calculated as) the amount of fluid flowing out from the inside of the transmission toward the outside measured when the sealing mechanism is installed to face the opposite direction. This measured value indicates the degree of sealing performance. When the seal mechanism is installed in the proper forward direction, the air is fed from the outside of the transmission to the inside. Therefore, a larger value of the feed rate means a smaller amount of fluid outflow (i.e., fluid leakage) from the inside of the transmission to the outside. This inhibits the oil or other lubricant from leaking out from the inside of the transmission toward the outside. In other words, the sealing performance in the transmission can be improved. The improvement of the sealing performance is less likely to be affected by temperature rise in the transmission. Therefore, it is possible to maintain the sealing performance regardless of temperature changes in the transmission caused by high speed rotation.

(2) The seal mechanism may include a suction-increasing portion, the suction-increasing portion being configured to increase, in accordance with a circumferential speed of the carrier, a feed rate of fluid fed from an outside of the seal lip portion toward an inside of the seal lip portion through an interstice between the lip end and the outer circumferential surface of the carrier.

(3) The carrier may rotate relative to the case such that a circumferential speed of the outer circumferential surface of the carrier is 70 mm/sec or higher.

(4) The suction-increasing portion may have a plurality of ribs extending from the lip end toward an outside of the seal lip portion along an axial direction of the carrier, so as to be inclined relative to the axial direction.

(5) The suction-increasing portion may include a plurality of rib regions arranged along a circumferential direction of the lip end. In the plurality of rib regions, the plurality of ribs are disposed in parallel to each other along the circumferential direction of the lip end. The "rib regions" refers to the regions formed in the circumferential direction of the lip end by the ends of the ribs contacting the lip end. Even if the ends of the ribs do not contact the lip end, the "rib regions" refers to the regions formed by the extended ribs contacting the lip end. In other words, the extent of the rib regions is defined by their lengths along the circumferential direction of the lip end.

(6) An axial dimension W of the plurality of rib regions along an axial direction of the carrier may satisfy a following condition: $W \geq ((WR2-Wr2)/2)/\tan\varphi$ where WR2 is an outer diameter of the outer circumferential surface of the carrier, Wr2 is an inner diameter of the seal lip portion, and $\varphi$ is a lip angle of the seal lip portion. The axial dimension of the rib regions refers to the length of the ribs along the axial direction of the carrier.

(7) Prior to assembly of the seal mechanism, the plurality of ribs protruding from the lip end along a radial direction of the lip end may have a height of 0.01 mm to 0.10 mm, and the plurality of ribs may have a width of 0.05 mm to 0.30 mm along the lip end.

(8) At a position where the seal mechanism is installed, a dimensional difference between an inner diameter of the case and an outer diameter of the seal mechanism before assembly may be larger than 5% and smaller than 20% of an original width, or a radial dimension of the seal mechanism before assembly. The dimensional difference refers to the tightening margin between the case and the sealing mechanism.

(9) For any two of the plurality of rib regions adjacent to each other in the circumferential direction of the lip end, the plurality of ribs may be formed to be inclined in opposite directions. The opposite direction of inclination of the ribs means that the angles between the ribs and the lip end are values with inverted signs, positive or negative.

(10) The plurality of rib regions may be spaced intermittently along the circumferential direction of the lip end. The suction-increasing portion includes inter-rib regions disposed between any two of the plurality of rib regions adjacent to each other in the circumferential direction of the lip end, the inter-rib regions having no ribs. The "inter-rib region" refers to the region interposed, in the circumferential direction of the lip end, between the rib located at the end of a rib region and the rib located at the end of another rib region adjacent thereto. Even if the ends of the ribs do not contact the lip end, the "inter-rib region" likewise refers to the region interposed, in the circumferential direction of the lip end, between the positions at which the extended ribs at the ends of the rib regions contact the lip end. In other words, the extent of the inter-rib regions is defined by their lengths along the circumferential direction of the lip end.

(11) A total of circumferential lengths of the plurality of rib regions may be within a range of 30% to 80% of an entire length of the lip end along the circumferential direction.

(12) In the suction-increasing portion, the plurality of ribs may have an inclination angle of 20° to 30°. The inclination angle of the ribs refers to the angle between the ribs and the lip end.

(13) In the plurality of rib regions, an interval between any two of the plurality of ribs adjacent to each other along the circumferential direction of the lip end may be within a range of 0.1 mm to 5 mm. The interval between the ribs refers to the distance between the ribs adjacent to each other along the circumferential direction of the lip end.

(14) The suction-increasing portion may be set such that the feed rate of fluid is 0.2 mL/h to 30 mL/h.

(15) A transmission according to another aspect of the invention includes: a case; an internal gear provided in the case and having internal teeth; an oscillating gear having external teeth meshing with the internal teeth of the internal gear, the oscillating gear being configured to be oscillatorily rotated; a crankshaft having an eccentric portion that rotatably supports the oscillating gear, the crankshaft being configured to transmit a rotational force of a drive source to the oscillating gear; a carrier configured to receive the rotational force from the oscillating gear and rotate relative to the case; and a seal mechanism provided between the case and the carrier. The seal mechanism includes: a seal lip portion having a lip end for sealing, the lip end being in linear contact with an outer circumferential surface of the carrier along a circumferential direction of the carrier; and a suction-increasing portion configured to increase a feed rate of fluid fed from an outside of the seal lip portion toward an inside of the seal lip portion through an interstice between the lip end and the outer circumferential surface of the carrier. The suction-increasing portion includes: a plurality of ribs extending from the lip end toward an outside of the seal lip portion along an axial direction of the carrier and extending at an angle to the axial direction; and forward rib regions, inter-rib regions, and reverse rib regions arranged along a circumferential direction of the lip end. In the forward rib regions and the reverse rib regions, the plurality of ribs are arranged in parallel to each other along the circumferential direction of the lip end. For the forward rib regions and the reverse rib regions, the plurality of ribs are formed to be inclined in opposite directions. The suction-increasing portion rotates relative to the case such that a circumferential speed of the outer circumferential surface of the carrier is 70 mm/sec or higher. The suction-increasing portion is set such that the feed rate of fluid is 30 to 300 times as high as in a case where the suction-increasing portion is not provided.

With this configuration, the fluid feed rate accomplished by the seal mechanism can be increased even when the temperature of the transmission rises during high-speed rotation at a circumferential speed of 70 mm/sec or higher, resulting in an improved sealing performance. Thus, it is possible to prevent leakage of liquid from the inside of the transmission to the outside.

## ADVANTAGEOUS EFFECTS

The present invention can provide a transmission having an improved sealing performance between a case and a shaft even for an increased rotation speed.

## BRIEF DESCRIPTION OF THE DRAWINGS

Fig. 1 is a schematic view showing a first embodiment of a transmission according to the invention.
Fig. 2 is a schematic view of a seal mechanism shown in Fig. 1. This seal mechanism, which is not yet assembled to the transmission, is viewed from the axial direction of the transmission.
Fig. 3 shows a partial cross-sectional view of the seal mechanism shown in Fig. 1. This seal mechanism is not yet assembled to the transmission.
Fig. 4 is a schematic view showing the sealing by the suction-increasing portion of the seal mechanism shown in Fig. 1.
Fig. 5 is a schematic view for explaining the fluid feed rate accomplished when the seal mechanism shown in Fig. 1 is installed in the opposite direction.
Fig. 6 is a longitudinal sectional view showing a second embodiment of the transmission according to the invention.
Fig. 7 is a longitudinal sectional view of the transmission along the line VII-VII in Fig. 6.
Fig. 8 is a longitudinal sectional view showing a third embodiment of the transmission according to the invention.

## DESCRIPTION OF THE EMBODIMENTS

<First Embodiment>

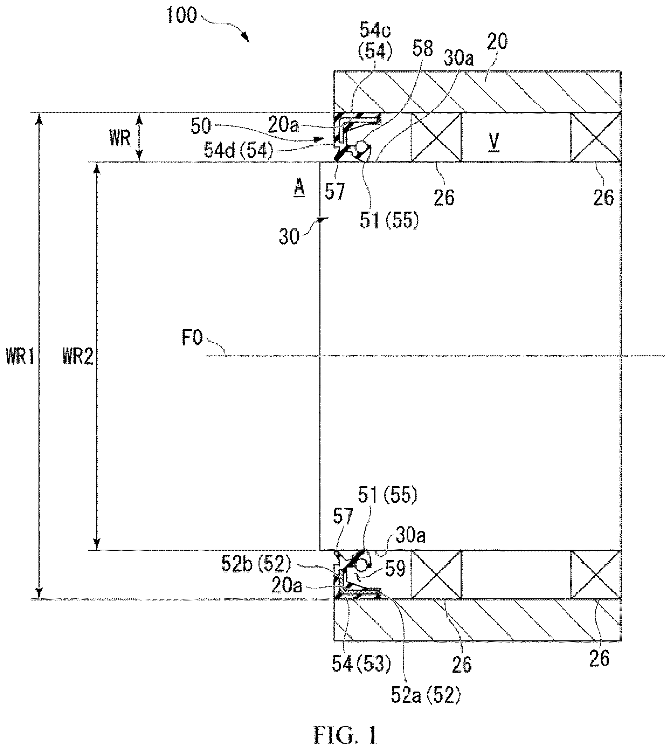

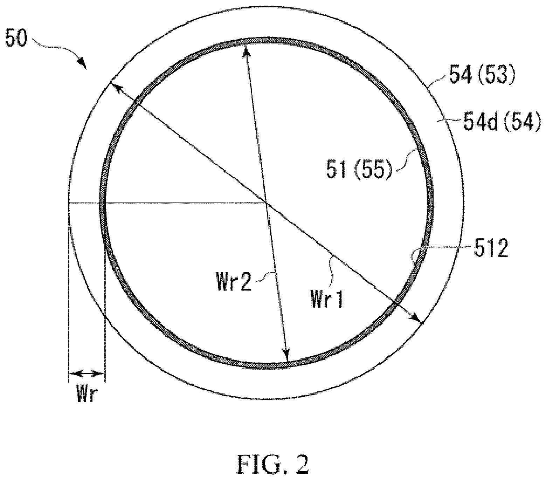

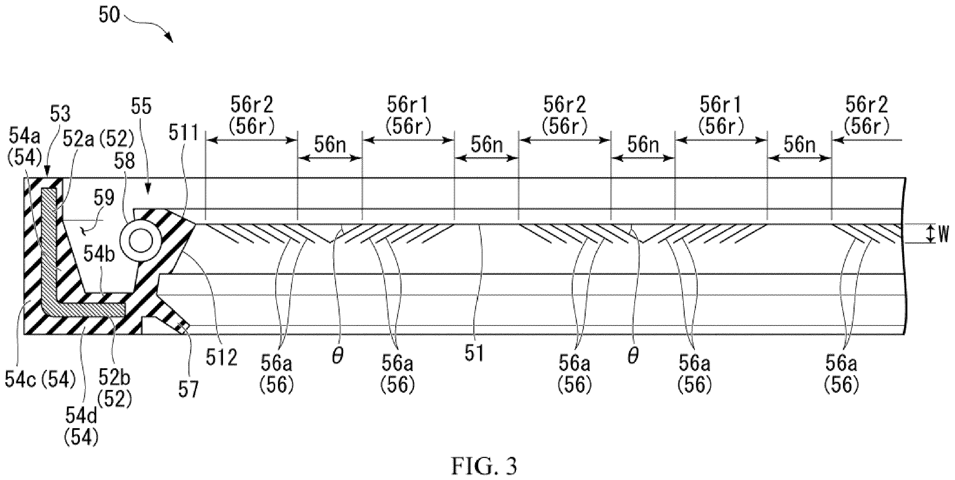

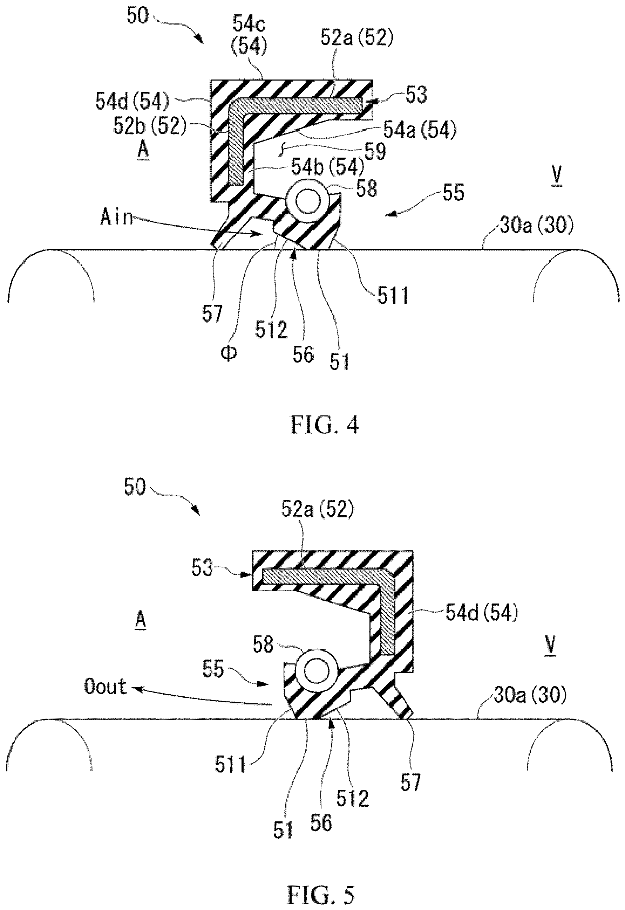

The following describes a transmission relating to a first embodiment of the invention with reference to the accompanying drawings. Fig. 1 is a schematic view showing the transmission relating to the embodiment. Fig. 2 is a schematic view of a seal mechanism shown in Fig. 1. This seal mechanism, which is not yet assembled to the transmission, is viewed from the axial direction. Fig. 3 shows a partial cross-sectional view of the seal mechanism shown in Fig. 1. This seal mechanism is not yet assembled to the transmission. Fig. 4 is a schematic view showing the sealing in the seal mechanism shown in Fig. 1.

As shown in Figs. 1 to 4, the transmission 100 relating to the embodiment includes a cylindrical case 20, a carrier 30, and a seal mechanism 50. In the transmission 100, the case 20 and the carrier 30 are configured to rotate relative to each other with respect to the rotation axis F0. The case 20 and the carrier 30 are assembled together for relative rotation via bearings 26.

In this embodiment, the direction along the rotation axis F0 may be referred to simply as the axial direction. Furthermore, in plan view along the axial direction, the directions intersecting the rotation axis F0 are referred to as the radial directions, and the direction circling around the rotation axis F0 is referred to as the circumferential direction. Furthermore, of the radial directions, the direction toward the rotation axis F0 is referred to as the radially inward direction, and the direction away from the rotation axis F0 is referred to as the radially outward direction.

The transmission 100 changes the speed of the rotational driving force input from the input section (not shown), and outputs the rotational driving force from one of the case 20 or the carrier 30. The other of the case 20 or the carrier 30 serves as a fixed portion. The components for fixing the fixed portion to other external components are not illustrated or described for this embodiment.

The internal space V of the transmission 100 is filled with a lubricant such as an oil. The internal space V is sealed by the seal mechanism 50. The seal mechanism 50 is disposed between the inner circumferential surface 20a of the case 20 and the outer circumferential surface 30a of the carrier 30. The inner circumferential surface 20a and the outer circumferential surface 30a are opposed to each other in the radial direction of the case 20. The inner circumferential surface 20a and the outer circumferential surface 30a have coaxial circular shape around the rotation axis F0. The inner circumferential surface 20a is disposed radially outside the outer circumferential surface 30a.

In this embodiment, the inner circumferential surface 20a of the case 20 and the outer circumferential surface 30a of the carrier 30 are flat in the vicinity of the seal mechanism 50. Therefore, the inner circumferential surface 20a of the case 20 and the outer circumferential surface 30a of the carrier 30 may have various radial dimensions, axial dimensions, or surface shapes, for example, in accordance with the configuration of the other components of the transmission 100 excluding the seal mechanism 50.

The seal mechanism 50 seals between the internal space V of the transmission 100 and the external space A. Sealing the internal space V of the transmission 100 means that no fluid, or lubricant such as oil, leaks from the internal space V of the transmission 100 toward the external space A. In order to keep the internal space V sealed such that no fluid leaks toward the external space A, the seal mechanism 50 is capable of sucking fluid from the external space A toward the internal space V.

The seal mechanism 50 is what is called an oil seal. The seal mechanism 50 includes a metal core 52, a seal member 53, a garter spring (spring) 58, and a suction-increasing portion 56. The seal member 53 is made of rubber or other elastic material and adhered to the core 52 by vulcanization adhesion. The core 52 has an annular shape formed by pressing or otherwise processing a steel plate such as SPCC, for example. The core 52 includes a first cylindrical portion 52a and a first annular portion 52b. The first cylindrical portion 52a has a cylindrical shape and extends in parallel with the inner circumferential surface 20a of the case 20, and the first annular portion 52b extends radially inward from one end of the first cylindrical portion 52a. The first annular portion 52b is formed on the end of the first cylindrical portion 52a positioned on the external space A side in the axial direction. Thus, the core 52 has an L-shaped cross section formed of the first cylindrical portion 52a and the first annular portion 52b.

The seal member 53 includes a base body portion (fitting portion) 54, a seal lip portion 55 that serves as a main lip, and an auxiliary lip portion (dust lip portion) 57. The base body portion 54 is bonded to the outer circumferential surface of the core 52 so that it covers the entirety of the core 52. Specifically, the base body portion 54 is bonded along the outer circumferential surface of the first cylindrical portion 52a of the core 52, and extends round the end surface of the first cylindrical portion 52a positioned on the inner space V side, and then is bonded along the inner circumferential surface of the first cylindrical portion 52a. Furthermore, the base body portion 54 is bonded along the side surface of the first annular portion 52b positioned on the external space A side and connected to the outer circumferential surface of the first cylindrical portion 52a of the core 52, and extends round the inner circumferential end of the first annular portion 52b positioned on the carrier 30 side, and then is bonded along the side surface of the first annular portion 52b positioned on the internal space V side. The base body portion 54 bonded to this side surface extends to the inner circumferential surface of the first cylindrical portion 52a. The seal lip portion 55 is integrated with the base body portion 54 so as to extend from the inner circumferential end of the first annular portion 52b of the core 52 toward the internal space V side. The auxiliary lip portion 57 is integrated with the base body portion 54 so as to extend from the inner circumferential end of the first annular portion 52b of the core 52 toward the external space A side.

The base body portion 54 includes a second cylindrical portion 54a, a second annular portion 54b, a third cylindrical portion 54c, and a third annular portion 54d. The second cylindrical portion 54a covers the inner circumferential surface of the first cylindrical portion 52a of the core 52. The second annular portion 54b covers the side surface of the first annular portion 52b of the core 52 that is positioned on the internal space V side. The third cylindrical portion 54c covers the outer circumferential surface of the first cylindrical portion 52a of the core 52. The third annular portion 54d covers the side surface of the first annular portion 52b of the core 52 that is positioned on the external space A side. In the base body portion 54 configured in this manner, the space enclosed by the second cylindrical portion 54a, the second annular portion 54b, and the seal lip portion 55 forms an annular recess 59 that is open toward the internal space V. The core 52 is press-fitted between the case 20 and the carrier 30 with the third cylindrical portion 54c of the base body portion 54 in contact with the inner circumferential surface 20a of the case 20. The entire seal mechanism 50 is thus fixed to the inner circumferential surface 20a of the case 20.

The auxiliary lip portion 57 has its proximal end at the inner circumferential end of the first annular portion 52b of the core 52 and extends toward the external space A side in the radially inward direction. The auxiliary lip portion 57 is thinner toward its distal end and slidably contacts the outer circumferential surface 30a of the carrier 30. The auxiliary lip portion 57 is positioned at a distance from the seal lip portion 55 along the axial direction toward the external space A side. The auxiliary lip portion 57 serves as a dust lip for previously preventing dust likely to enter from the external space A toward the internal space V side from reaching the seal lip portion 55.

The seal lip portion 55 has an annular shape extending along the circumferential direction. The seal lip portion 55 has its proximal end at the inner circumferential end of the first annular portion 52b of the core 52 and extends along the axial direction from the external space A side toward the internal space V side.

The seal lip portion 55 is a main lip for sealing between the internal space V and the external space A. The seal lip portion 55 has a lip end (linear seal position) 51 in linear contact along the circumferential direction with the outer circumferential surface 30a of the carrier 30. The seal lip portion 55 seals between the interior space V and the exterior space A using the lip end 51. The lip end 51 serves as a linear main lip that slidingly contacts the outer circumferential surface 30a of the carrier 30. The inner circumferential portion of the seal lip portion 55 is shaped such that the portions on the axially opposite sides of the lip end 51 are sloped so as to be separated from the outer circumferential surface 30a of the carrier 30 toward the axial directions away from the lip end 51.

Specifically, the inner circumferential portion of the seal lip portion 55 has an inside sloping surface (internal space-side sloping surface) 511 and an outside sloping surface (external space-side sloping surface) 512. The inside sloping surface 511 is axially positioned on the internal space V side of the lip end 51 and faces the internal space V. The inside sloping surface 511 is sloped from the lip end 51 to increase its diameter gradually. The outside sloping surface 512 is axially positioned on the external space A side of the lip end 51 and faces the external space A. The outside sloping surface 512 is sloped from the lip end 51 to increase its diameter gradually. Since the auxiliary lip portion 57 is positioned on the external space A side of the outside sloping surface 512, the outside sloping surface 512 does not face the external space A in a strict sense. However, since the auxiliary lip portion 57 is not essential and may not be formed, the outside sloping surface 512 is defined as facing the external space A.

Since the inside sloping surface 511 and the outside sloping surface 512 are positioned on opposite sides of the lip end 51, the inner circumferential portion of the seal lip portion 55 has a mountain-shaped cross section with the lip end 51 as the apex. In Fig. 4, the seal lip portion 55 is pressed against the outer circumferential surface 30a of the carrier 30, and thus the lip end 51 contacts the outer circumferential surface 30a with a predetermined width (seal width).

A garter spring (spring) 58 is attached to the outer circumferential portion of the seal lip portion 55 to tighten (press) the seal lip portion 55 radially inward to enhance sealing. The seal lip portion 55 seals between the internal space V and the external space A by slidingly contacting the outer circumferential surface 30a of the carrier 30. Thus, the seal lip portion 55 prevents the oil or other fluid filled in the internal space V from leaking out through the space between the carrier 30 and the case 20 into the external space A.

The suction-increasing portion 56 increases the feed rate of fluid fed from the external space A, which is positioned axially outside of the lip end 51, into the internal space V, which is positioned axially inside of the lip end 51. The suction-increasing portion 56 is set so that when the circumferential speed of the outer circumferential surface 30a of the carrier 30 relative to the seal lip portion 55 is 70 mm/sec to 5000 mm/sec, the feed rate of fluid is 30 to 300 times as high as in the case where the suction-increasing portion is not provided. More preferably, the suction-increasing portion 56 is set so that when the circumferential speed of the outer circumferential surface 30a of the carrier 30 relative to the seal lip portion 55 is 70 mm/sec to 1000 mm/sec, the feed rate of fluid is 30 to 200 times as high as in the case where the suction-increasing portion is not provided. The feed rate of fluid will be described later.

As shown in Figs 2 to 4, the suction-increasing portion 56 has a plurality of ribs 56a formed on the outside sloping surface 512. The plurality of ribs 56a extend along the axial direction from the lip end 51 toward the external space A side and are inclined with respect to the rotation axis F0. As will be described later, the presence of the plurality of ribs 56a increases the feed rate of fluid fed from the external space A, which is positioned outside of the lip end 51, into the internal space V, which is positioned inside of the lip end 51.

The suction-increasing portion 56 has a plurality of rib regions 56r spaced along the circumferential direction of the lip end 51. Each of the plurality of rib regions 56r has a plurality of ribs 56a inclined with respect to the rotation axis F0 and arranged parallel to each other. Each of the plurality of rib regions 56r extends along the circumferential direction of the lip end 51. As will be described later, the presence of the rib regions 56r increases the feed rate of fluid fed from the external space A, which is positioned outside of the lip end 51, into the internal space V, which is positioned inside of the lip end 51.

The plurality of rib regions 56r of the suction-increasing portion 56 include forward rib regions 56r1 and reverse rib regions 56r2. The forward rib regions 56r1 and the reverse rib regions 56r2 are arranged alternately along the circumferential direction of the lip end 51 so as to be adjacent to each other. The plurality of ribs 56a are inclined in opposite directions in the forward rib regions 56r1 and the reverse rib regions 56r2. As will be described later, the presence of the forward rib regions 56r1 and the reverse rib regions 56r2 increases the feed rate of fluid fed from the external space A, which is positioned outside of the lip end 51, into the internal space V, which is positioned inside of the lip end 51, irrespective of whether the rotation of the carrier 30 relative to the case 20 is in the forward or reverse direction.

As mentioned above, the plurality of rib regions 56r are spaced intermittently along the circumferential direction of the lip end 51. As a result, the suction-increasing portion 56 has inter-rib regions 56n positioned between the rib regions 56r adjacent to each other in the circumferential direction. The presence of the inter-rib regions 56n allows the forward rib regions 56r1 and the reverse rib regions 56r2 to be formed with a sufficient length on the lip end 51.

An inter-rib region 56n is defined by the lengthwise position along the lip end 51 from a connection point in one rib region 56r to a connection point in another rib region 56r adjacent to the one rib region 56r. These rib regions 56r have the ribs 56a connected to the lip end 51 at regular intervals. At the connection point in the one rib region 56r, the rib 56a forming the end of the one rib region 56r is connected to the lip end 51, and at the connection point in the other rib region 56r, the rib 56a forming the end of the other rib region 56r is connected to the lip end 51. For a forward rib region 56r1 and a reverse rib region 56r2 adjacent to each other in the circumferential direction, the inter-rib region 56n is defined as the region between the connection point at which the rib 56a positioned at the end of the forward rib region 56r1 is connected to the lip end 51 and the connection point at which the rib 56a positioned at the end of the reverse rib region 56r2 is connected to the lip end 51.

In other words, the inter-rib region 56n is defined by a length along the lip end 51 between the connection point at which the rib 56a positioned at the end of one rib region 56r is connected to the lip end 51 and the connection point at which the rib 56a positioned at the end of another rib region 56r adjacent to the one rib region 56r is connected to the lip end 51. The length of the inter-rib region 56n is larger than the intervals between the plurality of ribs 56a in each rib region 56r. The rib regions 56r and the inter-rib regions 56n are defined by the circumferential length corresponding to the connection points at which the ribs 56a are connected to the lip end 51, regardless of the inclination angle of the ribs 56a or the like. Therefore, the rib regions 56r and the inter-rib regions 56n are defined only by their circumferential length, although they are called regions (see Fig. 3).

The suction-increasing portion 56 is formed so that the total of the circumferential lengths of all rib regions 56r is within the range of 30% to 80% of the entire length of the lip end 51 along the circumferential direction. In other words, the suction-increasing portion 56 is formed such that the total of the circumferential lengths of all inter-rib regions 56n is within the range of 70% to 20% of the entire length of the lip end 51 along the circumferential direction. The suction-increasing portion 56 formed so that the total of the circumferential lengths of the rib regions 56r is within the range of 30% to 80% of the entire circumferential length of the lip end 51 can increase the feed rate of fluid fed from the external space A, which is positioned outside of the lip end 51, into the internal space V, which is positioned inside of the lip end 51.

In the suction-increasing portion 56, the angle $\theta$ of the ribs 56a, which are inclined with respect to the rotation axis F0, is set at 20° to 30°. In other words, on the outside sloping surface 512, the angle $\theta$ between the lip end 51 and the ribs 56a is set at 20° to 30°. The suction-increasing portion 56 formed so that the angle $\theta$ between the lip end 51 and the ribs 56a is within the range of 20° to 30° can increase the feed rate of fluid fed from the external space A, which is positioned outside of the lip end 51, into the internal space V, which is positioned inside of the lip end 51.

In the rib regions 56r, the intervals between the ribs 56a adjacent to each other along the circumferential direction are within the range of 0.1 mm to 5 mm. In other words, the intervals along the lip end 51 between the connection points at which the ribs 56a adjacent to each other along the circumferential direction are connected to the lip end 51 are within the range of 0.1 mm to 5 mm. The suction-increasing portion 56 formed so that the intervals along the lip end 51 between the plurality of ribs 56a are within the range of 0.1 mm to 5 mm can increase the feed rate of fluid fed from the external space A, which is positioned outside of the lip end 51, into the internal space V, which is positioned inside of the lip end 51.

The suction-increasing portion 56 is formed so that the dimension W of the rib region 56r along the axial direction satisfies the following equation:

$$W \geq \{(WR2-Wr2)/2\}/\tan\varphi$$

where WR2 is the outer diameter of the outer circumferential surface 30a of the carrier 30 (see Fig. 1), Wr2 is the inner diameter of the seal lip portion 55 of the seal mechanism 50 (see Fig. 2), $\varphi$ is the lip angle of the seal lip portion 55 (see Fig. 4).

As shown in Fig. 4, the lip angle $\varphi$ is the angle between the outside sloping surface 512 and the outer circumferential surface 30a of the carrier 30. The inner diameter Wr2 and the outer diameter of the seal lip portion 55 are the dimensions in the seal mechanism 50 yet to be assembled.

Thus, in the inter-rib region 56n, which is the boundary between the forward rib region 56r1 and the reverse rib region 56r2, the ends of the ribs 56a that are positioned on the opposite side in the axial direction to the lip end 51 are connected to each other. In other words, in the inter-rib region 56n, which is the boundary between the forward rib region 56r1 and the reverse rib region 56r2, a triangular shape is formed by connection between the ends of the adjacent rib regions 56a. This increases the feed rate of fluid fed from the external space A, which is positioned outside of the lip end 51, into the internal space V, which is positioned inside of the lip end 51.

Prior to assembly of the seal mechanism 50, the ribs 56a have a height of 0.01 mm to 0.10 mm along the radial direction. The height of the ribs 56a corresponds to the protruding dimension of the ribs 56a protruding from the lip end 51 toward the inside in the radial direction. Furthermore, prior to assembly of the seal mechanism 50, the ribs 56a have a width of 0.05 mm to 0.30 mm along the circumferential direction. The width of the ribs 56a corresponds to the length of the ribs 56a extending along the lip end 51 in the circumferential direction. The ribs 56a formed to have a height along the radial direction and a width along the circumferential direction within the above ranges increases the feed rate of fluid fed from the external space A, which is positioned outside of the lip end 51, into the internal space V, which is positioned inside of the lip end 51.

Each of the plurality of ribs 56a may be formed to have the same height along the radial direction and the same width along the circumferential direction. Alternatively, each of the plurality of ribs 56a may be formed to have different dimensions, as long as the height along the radial direction and the width along the circumferential direction are within the above ranges. In the pre-assembly state (free state) of the seal mechanism 50, the inner diameter of the lip end 51 is the same as or smaller than the outer diameter of the outer circumferential surface 30a of the carrier 30.

When the inner diameter of the lip end 51 is the same as the outer diameter of the outer circumferential surface 30a of the carrier 30, it follows, for example, that these diameters are equal to each other without considering the height of the ribs 56a. Also, when the carrier 30 is inserted inside the seal lip portion 55, and the lip end 51 is in sliding contact with the outer circumferential surface 30a of the carrier 30 (only the ribs 56a are squeezed) while being elastically deformed, the inner diameter of the lip end 51 and the outer diameter of the outer circumferential surface 30a of the carrier 30 are the same. The inner diameter of the lip end 51 and the outer diameter of the outer circumferential surface 30a can be set appropriately to have a predetermined dimensional difference from the state where only the ribs 56a are squeezed. When the inner diameter of the lip end 51 and the outer diameter of the outer circumferential surface 30a have a predetermined dimensional difference, the seal lip portion 55 is elastically deformed toward the outside in the radial direction. This allows the sealing performance and the feed rate of fluid to be set as desired.

In the transmission 100 according to this embodiment, the seal width WR (see Fig. 1) along the radial direction sealed by the seal mechanism 50 installed between the inner circumferential surface 20a of the case 20 and the outer circumferential surface 30a of the carrier 30 is smaller than the original seal width Wr (see Fig. 2) of the seal mechanism 50 before assembly (see Fig. 2). In other words, the seal width WR of the seal mechanism 50 after assembly is smaller than the original seal width Wr (the difference between the inner and outer diameters of the seal mechanism 50) of the seal mechanism 50 before assembly.

Furthermore, in the transmission 100 according to this embodiment, the dimensional difference between the inner diameter WR1 (see Fig. 1) of the inner circumferential surface 20a of the case 20 and the outer diameter Wr1 (see Fig. 2) of the seal mechanism 50 before assembly, at the position where the seal mechanism 50 is installed, is larger than 5% and smaller than 20% of the original seal width (original width) Wr (see Fig. 2) of the seal mechanism 50 before assembly. This allows the seal mechanism 50 to be squeezed with a sufficient tightening margin, thus achieving sufficient sealing performance and a sufficient fluid feed rate.

The foregoing described the settings of the structure of the ribs 56a, the positional relationship between the rib regions 56r and the inter-rib regions 56n, the positional relationship between the forward rib regions 56r1 and the reverse rib regions 56r2, and the dimension W of the rib regions 56r along the axial direction, in the suction-increasing portion 56 according to this embodiment. These settings allow the fluid feed rate to be 0.2 mL/h to 30 mL/h. This increases the feed rate of fluid fed from the external space A, which is positioned outside of the lip end 51, into the internal space V, which is positioned inside of the lip end 51, thus achieving a sufficient sealing performance.

As shown in Fig. 4, when the carrier 30 is inserted into the inner circumference of the seal lip portion 55, the end of the seal lip portion 55 positioned in the internal space V moves elastically toward the outside in the radial direction. This causes the end positioned in the internal space V and the lip end 51 to deform elastically so as to slightly expand in diameter. Fig. 4 shows that the carrier 30 is inserted into the inner circumference of the seal lip portion 55, so that the lip end 51 elastically deforms to slidingly contact the outer circumferential surface 30a of the carrier 30.

In this embodiment, it was described that only one seal mechanism 50 is provided between the inner circumferential surface 20a of the case 20 and the outer circumferential surface 30a of the carrier 30, but this example is not limitative. For example, two seal mechanisms 50 may be arranged in the axial direction between the inner circumferential surface 20a of the case 20 and the outer circumferential surface 30a of the carrier 30. In this case, an annular space extending in the circumferential direction can be formed by the recess 59 of the first-stage seal mechanism 50, the third annular portion 54d of the second-stage seal mechanism 50, and the outer circumferential surface 30a of the carrier 30.

The following describes the increase of the fluid feed rate.

Fig. 5 is a schematic view for explaining the fluid feed rate in the seal mechanism 50. In the following description, the effect of the auxiliary lip portion 57 is not considered.

As described above, the seal mechanism 50 is an oil seal with ribs (thread ribs) 56a formed on the lip end 51 of the seal lip portion 55, and the ribs 56a exert a fluid pumping effect. This serves to improve the sealing performance of the transmission 100 with respect to oil or other sealing fluids. In the case where the carrier 30, which is the mating sliding member, rotates in both forward and reverse directions around the rotation axis F0, the ribs (bidirectional thread ribs) 56a are formed on the outside sloping surface 512 of the seal lip portion 55 to extend from the lip end 51, as shown in Fig. 3.

The suction-increasing portion 56 includes the forward rib regions 56r1 that exert a sealing action by pumping when the carrier 30 rotates in the forward direction and the reverse rib regions 56r2 that exert a sealing action by pumping when the carrier 30 rotates in the reverse direction. In the forward rib regions 56r1 and the reverse rib regions 56r2, the directions of the plurality of ribs 56 arranged circumferentially are opposite. In both the forward rib regions 56r1 and the reverse rib regions 56r2, the ribs 56a have a triangular cross section with a pointed tip (apex).

Specifically, the ribs 56a are inclined in opposite directions in the forward rib regions 56r1 and the reverse rib regions 56r2. Furthermore, the pointed tips of the ribs 56a extend to the lip end 51, which corresponds to the tip apex of the seal lip portion 55, and also intersects the lip end 51.

To evaluate the lubrication characteristics and the sealing characteristics of the seal lip portion 55 of the seal mechanism 50, which is an oil seal, friction characteristics were verified. In the verification, the seal mechanism 50 was mounted on a test machine that simulates the transmission 100. The test machine simulating the transmission 100 includes a carrier that has the same diameter as the outer circumferential surface 30a of the carrier 30 and the same surface conditions as the outer circumferential surface 30a. Furthermore, the test machine simulating the transmission 100 includes a case that has the same diameter as the inner circumferential surface 20a of the case 20 and the same surface conditions as the inner circumferential surface 20a. The surface conditions are the surface characteristics that affect the friction characteristics, such as macroscopic and microscopic unevenness, or the directions of protrusions.

The relationship between the dimensionless characteristic number G, which is determined by the shape and the service conditions of the seal mechanism 50 (hereinafter also referred to as the oil seal 50), and the friction coefficient f at that time is expressed as the Formula (1) that follows.

$$f = \Phi G/3 \qquad ... (1)$$

The symbols f, $\Phi$, and G in Formula (1) indicate the following.

    f = friction coefficient
    $\Phi$ = constant determined by oil film conditions
    G = dimensionless characteristic number (= $\mu*u*b/Pr$)

Furthermore, the symbols $\mu$, u, b, and Pr indicate the following.

    $\mu$ = viscosity of sealing fluid (N·sec/cm$^2$ [kgf·sec/cm$^2$])
    u = circumferential speed (cm/sec)
    b = contact width of seal lip portion 55 in the axial direction (cm)
    Pr = tension force of the seal lip portion 55 (N [kgf])

A graph with the friction coefficient f on the vertical axis and the dimensionless characteristic number G on the horizontal axis shows that the friction coefficient f is constant up to a given range of the dimensionless characteristic number G, but beyond that range, the friction coefficient f increases monotonically. The phenomenon in the region of the dimensionless characteristic number G that forms a positive gradient is described in lubrication theory as a characteristic of fluid lubrication. In such lubrication conditions, similar to the characteristics in bearings, the friction characteristics of the oil seal 50 are governed by the viscosity of the fluid and the sliding speed, and an oil film is present in the sliding parts. In other words, the two surfaces sliding between the oil seal 50 and the outer circumferential surface 30a of the carrier 30 are in sliding motion in a fluid-lubricated condition macroscopically separated by the oil film, and the friction force of the oil seal 50 is maintained low.

The sealing mechanism of the oil seal 50 results from the movement of oil on the two sliding surfaces, i.e., the movement of oil within the sliding contact surfaces of the oil seal 50. In other words, the sealing performance of the oil seal 50 results from the movement of oil within the lip end 51, which is in linear contact with the outer circumferential surface 30a of the carrier 30 with a predetermined width in the axial direction. The movement of oil is circulating from the external space A side to the internal space V side and from the internal space V side to the external space A side within the contact area of the lip end 51. In the contact area of the lip end 51, the oil circulation provides excellent lubrication on the sliding contact surfaces and prevents the progression of wear of the oil seal 50. Furthermore, oil will not leak from the internal space V to the external space A. This is because the circulation of oil causes fluid, either oil or air, to be fed from the external space A side toward the internal space V side.

The mechanism of sealing by feeding fluid toward the internal space V is determined by the uneven shapes and unevenness distributions of the lip end 51 and the outer circumferential surface 30a in contact with the lip end 51, and by the pressure distribution generated between the lip end 51 and the outer circumferential surface 30a. In other words, a high fluid feed rate in the oil seal 50 increases the sealing performance, while a low fluid feed rate relatively reduces the sealing performance.

It is difficult to directly measure the fluid feed rate in the oil seal 50. Therefore, as shown in Fig. 5, oil is filled into the internal space V in the reverse installation state, where the oil seal 50 is installed so that the seal lip portion 55 is positioned on the external space A side. Then, in this reverse installation state, the flow rate of oil flowing out from the internal space V side to the external space A side is measured. This method provides the fluid feed rate in the normal installation state (see Fig. 4) in which the oil seal 50 is installed so that the seal lip portion 55 is positioned on the internal space V side.

Fig. 4 shows the oil sealing of the internal space V in the normal installation state of the oil seal 50. In Fig. 4, the arrow Ain indicates the state in which the air is fed from the external space A to the internal space V. Fig. 5 shows oil leakage from the internal space V in the reverse installation state of the oil seal 50. In Fig. 5, the arrow Oout indicates the oil leaking from the internal space V toward the external space A.

In the reverse installation state shown in Fig. 5, the amount of oil leaking to the external space A side is measured per unit time, so as to quantitatively determine the amount of oil corresponding to the fluid feed rate in the normal installation state shown in Fig. 4. In other words, the amount of oil leaking to the external space A side in the reverse installation state is measured to quantitatively determine the sealing performance of the oil seal 50.

The lip end 51 in the seal lip portion 55 is an important factor in forming the unevenness of the sliding surface of the oil seal 50. The contact pressure distribution at the lip end 51 is identical in the circumferential direction, and the following description compares to an oil seal 50 formed with different heights of fine unevenness at the lip end 51.

As the number of fine irregularities at the lip end 51 is larger, the amount of oil that leaks out in the reverse installation state is larger. Therefore, in the normal installation state, the ability to feed fluid from the external space A toward the internal space V is higher. Alternatively, the fluid feed rate can be varied by changing the macroscopic state of contact of the lip end 51 with the outer circumferential surface 30a and the contact pressure distribution of the lip end 51 contacting the outer circumferential surface 30a.

Thus, the two factors governing the sealing mechanism of the oil seal 50, the lubrication characteristics and the sealing mechanism, are controlled by two factors: the material forming the seal lip portion 55 and the shape near the lip end 51. From a microscopic point of view, it is necessary to set the material characteristics in consideration of the average film thickness control in the suction and discharge regions of the circulating flow in the sliding surface where the lip end 51 and the outer circumferential surface 30a are in contact with each other.

To control these, the rib regions 56r are formed on the outside sloping surface 512 of the seal lip portion 55 in this embodiment. In order to control the sealing characteristics, it is necessary to consider the operating conditions of the transmission 100. In other words, only when the transmission 100 operates in operating conditions in which the circumferential speed of the outer circumferential surface 30a of the carrier 30 is within a predetermined range, it is possible to perform the average film thickness control in the suction and discharge regions of the circulating flow in the sliding surface described above.

Therefore, in this embodiment, the suction-increasing portion 56 is set so that when the circumferential speed of the outer circumferential surface 30a of the carrier 30 relative to the seal lip portion 55 is 70 mm/sec to 5000 mm/sec, the feed rate of fluid is 30 to 300 times as high as in the case where the suction-increasing portion 56 is not provided.

When the circumferential speed of the outer circumferential surface 30a of the carrier 30 relative to the seal lip portion 55 is 70 mm/sec or higher, the transmission 100 is likely to rotate at a high speed, depending on the size of the transmission 100. When the transmission 100 rotates at a high speed, the surface temperature rises. In this case, the seal width WR may change, and the sealing performance of the seal mechanism 50 may decrease. The Inventors are aware that the operational stability of the transmission 100 cannot be ensured when the surface temperature of the transmission 100 is 60°C or higher.

In this respect, this embodiment has the suction-increasing portion 56 provided in the seal mechanism 50, so that sealing performance can be maintained even when the seal mechanism 50 has a higher surface temperature. In other words, according to the transmission 100 of this embodiment, the effect of temperature rise caused by high-speed rotation can be canceled, and a high sealing performance can be maintained.

When the circumferential speed is 70 mm/sec or lower, the surface temperature of the transmission 100 will not exceed 60°C. However, in a conventional seal mechanism, the sealing performance would be reduced, and oil or other lubricant could leak out of the transmission 100. By contrast, the oil seal 50 having a suction-increasing portion 56 as in the present embodiment can maintain sufficient sealing performance.

In the transmission 100 of this embodiment, the fluid feed rate accomplished by the seal mechanism 50 can be increased even when the temperature rises during high-speed rotation at the circumferential speed of 70 mm/sec or higher. This inhibits the oil or other lubricant from leaking out of the internal space V of the transmission 100 toward the external space A. In other words, the sealing performance in the transmission 100 can be improved. This improvement of the sealing performance is less likely to be affected by temperature rise. Therefore, it is possible to maintain the sealing performance regardless of temperature changes in the transmission 100 caused by high speed rotation or other conditions.

Furthermore, the presence of the ribs 56a improves the lip rigidity of the seal lip portion 55. Therefore, the seal resistance can be increased against attacks by sludge on the seal lip portion 55 and the outer circumferential surface 30a of the carrier 30. In addition, the smaller contact area of the seal lip portion 55 to the outer circumferential surface 30a of the carrier 30 reduces heat generation.

<Second Embodiment>

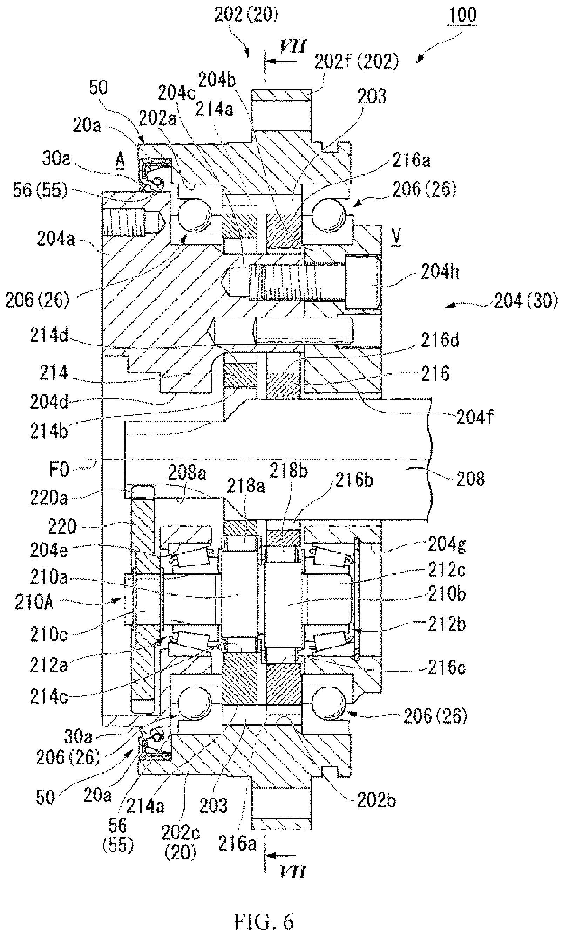

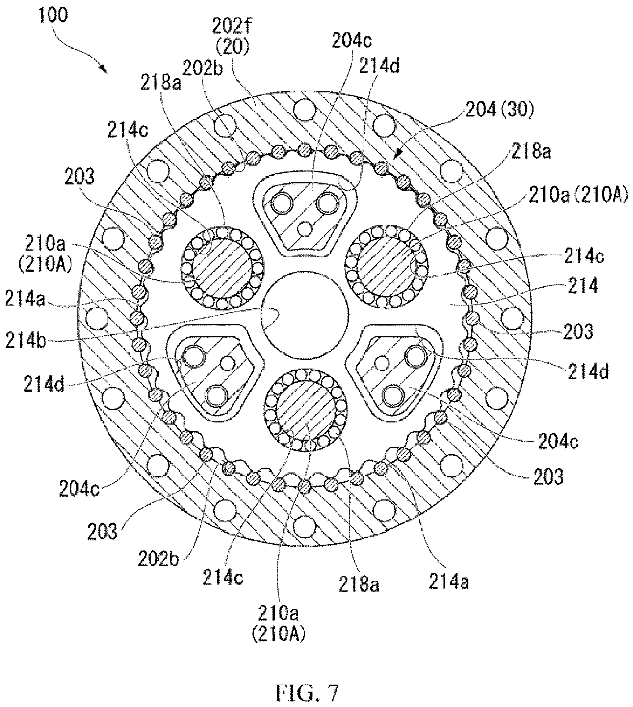

The following describes a transmission relating to a second embodiment of the invention with reference to the accompanying drawings. Fig. 6 is a sectional view showing the transmission (speed reducer) relating to this embodiment along a rotation axis. Fig. 7 is a sectional view viewed along the arrows VII-VII in Fig. 6.

As shown in Figs. 6 and 7, the transmission (speed reducer) 100 in this embodiment functions as an eccentric oscillation speed reducer. The transmission 100 includes a case 202, a carrier 204, and a seal mechanism 50. The case 202 corresponds to the case 20 in the first embodiment. The carrier 204 corresponds to the carrier 30 in the first embodiment. The case 202 includes a case body 202c and a case flange 202f.

In this embodiment, the direction along the rotation axis F0 of the case body 202c may be referred to simply as the axial direction. Furthermore, in plan view along the axial direction, the directions intersecting the rotation axis F0 are referred to as the radial directions, and the direction circling around the rotation axis F0 is referred to as the circumferential direction. Furthermore, of the radial directions, the direction toward the rotation axis F0 is referred to as the radially inward direction, and the direction away from the rotation axis F0 is referred to as the radially outward direction. The term "input side" refers to the internal space V side on which the transmission 100 is connected to the drive source, and the term "output side" refers to the external space A side on which the output of the transmission 100 is received. The transmission 100 transmits a driving force while changing the rotation speed at a predetermined ratio between the drive source and the output side member. In this embodiment, one of the case 202 and the carrier 204 serves as an output portion, and the other serves as a fixed portion. In other words, one of the case 202 and carrier 204, which rotate relative to each other, is connected to a fixed member for fixing the transmission 100, and the other is connected to an output side member that rotates.

The case body (outer tube) 202c has a tubular shape centered on the rotation axis F0. The case body 202c, which is an example of a first tube, is open toward the external space A. The opening of the case body 202c houses the carrier 204 so as to be rotatable. The case flange 202f is formed to extend radially outward from the case body 202c and is connected to the fixed member or the output side member. The case flange 202f is formed integrally with the portion of the case body 202c that is located on the input side. The transmission 100 has, on the output side thereof, a plurality of (for example, three) transmission gears 220 and input gears 220a, and these gears are exposed.

The transmission 100 includes the case body 202c of the case 202, the carrier 204 as an example of a rotating member, an input shaft 208, a plurality of (e.g., three) crankshafts 210A, a first oscillating gear 214, a second oscillating gear 216, and the plurality of transmission gears 220.

In the transmission 100, as the input shaft 208 corresponding to the input gears 220a is rotated, the crankshafts 210A are resultantly rotated. With such arrangement, as the eccentric portions 210a and 210b of the crankshafts 210A rotate, the oscillating gears 214 and 216 can resultantly oscillatorily rotate. In this way, the transmission 100 can reduce rotation input thereto and output the reduced rotation. The input gears 220a or the transmission gears 220 constitute the input section.

The case 202 forms the outer surface of the transmission 100 and has a substantially cylindrical shape. A plurality of pin grooves 202b are formed in the inner circumferential surface of the case 202. Each pin groove 202b extends in the axial direction of the case 202 and has a semicircular cross-sectional shape along the plane orthogonal to the axial direction. The pin grooves 202b are arranged at equal intervals in the circumferential direction on the inner circumferential surface of the case body 202c. The inner circumferential surface 202a of the case 202 is located on the input side of the inner circumferential surface 20a along the axial direction, and the seal mechanism 50 described in the first embodiment is installed on the inner circumferential surface 20a. In the illustrated example, the inner circumferential surface 202a and the inner circumferential surface 20a have different diameters, but this example is not limitative.

The case 202 has a plurality of internal tooth pins 203. The internal tooth pins 203 are attached in the pin grooves 220b. More specifically, each internal tooth pin 203 is fitted in the corresponding pin groove 202b and retained therein such that it extends in the axial direction of the case 202. In this manner, the plurality of internal tooth pins 203 are arranged at regular intervals along the circumference of the case 202. The internal tooth pins 203 mesh with first external teeth 214a of the first oscillating gear 214 and second external teeth 216a of the second oscillating gear 216.

The carrier 204 is aligned coaxially with the case 202 and is housed within the case 202. The carrier 204 is rotatable relative to the case 202 about the same axis. More specifically, the carrier 204 is disposed on the radially inner side of the case 202. The carrier 204 is supported by a pair of main bearings 206 (26), which are spaced away from each other in the axial direction, so as to be rotatable relative to the case 202.

The carrier 204 includes a base portion and an end plate (flange) 204b. The base portion includes a base plate 204a and a plurality of (for example, three) shaft portions 204c. The base plate 204a is disposed on the output side within the case 202. The base plate 204a has a through hole 204d formed at the center thereof. A plurality of (for example, three) crankshaft mounting holes 204e (hereinafter referred to simply as "mounting holes 204e") are arranged at equal intervals in the circumferential direction around the through hole 204d.

The end plate 204b is spaced away from the base plate 204a in the axial direction and positioned on the input side within the case 202. The end plate 204b has a through hole 204f at the center thereof. A plurality of (for example, three) crankshaft mounting holes 204g (hereinafter referred to simply as "mounting holes 204g") are arranged at equal intervals in the circumferential direction around the through hole 204f. The plurality of mounting holes 204g are positioned to be opposed to the plurality of mounting holes 204e in the axial direction. Inside the case 202, a closed space is defined by the inner surfaces of the end plate 204b and the base plate 204a and the inner circumferential surface 202a of the case 202.

The three shaft portions 204c are integrated with the base plate 204a and extend linearly from the base plate 204a toward the end plate 204b. The three shaft portions 204c are arranged at regular intervals in the circumferential direction (see Fig. 7). The shaft portions 204c are fastened to the end plate 204b with bolts 204h (see Fig. 6). In this manner, the base plate 204a, the shaft portions 204c, and the end plate 204b together constitute a single integral piece.

The input shaft 208 serves as an input section for receiving a driving force input thereto from a driving motor (not shown). The input shaft 208 runs through the through hole 204f formed in the end plate 204b and the through hole 204d formed in the base plate 204a. The input shaft 208 is disposed such that its axis is aligned with the rotation axis F0, the axis of the case 202 and the carrier 204, and the input shaft 208 is rotatable about the rotation axis F0. An input gear 208a is provided on the outer circumferential surface of the distal end of the input shaft 208.

The three crankshafts 210A are arranged around the input shaft 208 within the case 202 (see Fig. 7). The three crankshafts 210A are arranged at regular intervals in the circumferential direction of the input shaft 208. The crankshafts 210A are each supported by a pair of crank bearings 212a and 212b so as to be rotatable relative to the carrier 204 (see Fig. 6). Specifically, the first crank bearing 212a is mounted in the corresponding mounting hole 204e formed in the base plate 204a. On the other hand, the second crank bearing 212b is mounted in the corresponding mounting hole 204g formed in the end plate 204b. The crankshafts 210A are rotatably supported by the base plate 204a and the end plate 204b via the first crank bearing 212a and the second crank bearing 212b.

Each crankshaft 210A includes a shaft body 212c, and a first eccentric portion 210a and a second eccentric portion 210b formed integrally with the shaft body 212c. The first and second eccentric portions 210a, 210b are arranged in the axial direction between the first crank bearing 212a and the second crank bearing 212b. The first and second eccentric portions 210a and 210b are each shaped like a circular cylinder. The first and second eccentric portions 210a and 210b project radially outward from the shaft body 212c while being eccentrically arranged relative to the central axis of the shaft body 212c. The first and second eccentric portions 210a and 210b are eccentric from the axis of the shaft body 212c by a predetermined amount of eccentricity. The first and second eccentric portions 210a and 210b have a phase difference of a predetermined angle from each other.

The portion of the crankshaft 210A located on the output side of the mounting hole 204e is provided with a mating portion 210c. The transmission gear 220 is mounted to the mating portion 210c. The transmission 100 relating to the present embodiment is not limited to the example case shown in Figs.6 and 7. For example, in the transmission 100, the crankshafts 210A may be oriented oppositely in the axial direction. This is the opposite arrangement, in which the mating portions 210c are located on the input side of the mounting holes 204g.

The first oscillating gear 214 is located in the closed space within the case 202 and is attached to the first eccentric portion 210a of each crankshaft 210A via a first roller bearing 218a. As each crankshaft 210A rotates, the first eccentric portion 210a eccentrically rotates. This eccentric rotation results in the first oscillating gear 214 oscillatorily rotating while meshing with the internal tooth pins 203.

The first oscillating gear 214 has an outer diameter slightly smaller than the inner diameter of the case 202. The first oscillating gear 214 has first external teeth 214a, a central through hole 214b, a plurality of (for example, three) first eccentric portion insertion holes 214c, and a plurality of (for example, three) shaft portion insertion holes 214d. The first external teeth 214a are shaped like smooth and continuous waves along the entire circumference of the oscillating gear 214.

The central through hole 214b is formed at the center of the first oscillating gear 214. The central through hole 214b receives therein the input shaft 208 with a clearance therebetween.

The three first eccentric portion insertion holes 214c are formed in the first oscillating gear 214 and arranged at regular intervals in the circumferential direction around the central through hole 214b. The first eccentric portions 210a of the crankshafts 210A are inserted in the first eccentric portion insertion holes 214c, via the first rolling bearings 218a interposed therebetween.

The three shaft portion insertion holes 214d are formed in the first oscillating gear 214 and arranged at regular intervals in the circumferential direction around the central through hole 214b. The shaft portion insertion holes 214d are positioned between the first eccentric portion insertion holes 214c next to each other in the circumferential direction. The shaft portion insertion holes 214d receive therein the corresponding shaft portions 204c with a clearance therebetween.

The second oscillating gear 216 is located in the closed space within the case 202 and is attached to the second eccentric portion 210b of each crankshaft 210A via a second roller bearing 218b. The first and second oscillating gears 214 and 216 are arranged in the axial direction so as to correspond to the first and second eccentric portions 210a and 210b. As each crankshaft 210A rotates, the second eccentric portion 210b eccentrically rotates. This eccentric rotation results in the second oscillating gear 216 oscillatorily rotating while meshing with the internal tooth pins 203.

The second oscillating gear 216 has an outer diameter slightly smaller than the inner diameter of the case 202. The second oscillating gear 216 has second external teeth 216a, a central through hole 216b, a plurality of (for example, three) second eccentric portion insertion holes 216c, and a plurality of (for example, three) shaft portion insertion holes 216d. These are designed in the same manner as the first external teeth 214a, the central through hole 214b, the first eccentric portion insertion holes 214c, and the shaft portion insertion holes 214d of the first oscillating gear 214. The second eccentric portions 210b of the crankshafts 210A are inserted in the second eccentric portion insertion holes 216c, via the second rolling bearings 218b interposed therebetween.

Each transmission gear 220 transmits the rotation of the input gear 208a to the corresponding one of the crankshafts 210A. Each transmission gear 220 is fitted onto the mating portion 210c of the corresponding crankshaft 210A. Each transmission gear 220 is rotatable integrally with the corresponding crankshaft 210A around the same axis as the corresponding crankshaft 210A. Each transmission gear 220 has the input gear 220a meshing with the input gear 208a.

The transmission 100 is a gear device configured to transmit a driving force while changing the rotation speed at a predetermined ratio between the drive source (first member) and the rotating member (second member). The transmission 100 includes an eccentric portion (210a, 210b), an oscillating gear (214, 216) having insertion holes (214c, 216c) through which the eccentric portion is inserted and teeth (214a, 216a), a first tube (case 202) mountable on one of the first and second members, and a second tube (carrier 204) mountable on the other of the first and second members. The first tube (202) has internal tooth pins (203) meshing with the teeth of the oscillating gears. The second tube is positioned inside the first tube in the radial direction while holding the oscillating gears. The first and second tubes are concentrically arranged and rotatable relative to each other when acted upon by oscillation of the oscillating gears caused by rotation of the eccentric portions in the reduction mechanism portion.

The transmission 100 relating to the embodiment includes the seal mechanism 50 disposed between the case 202 and the carrier 204. The seal mechanism 50 is disposed between the case 202 and the carrier 204 at a position on the external space A side. Therefore, the portion of the annular gap formed between the case 202 and the carrier 204 positioned on the external space A side is sealed by the seal mechanism 50. The seal mechanism 50 seals between the internal space V and the external space A.

The seal mechanism 50 is disposed between the inner circumferential surface 20a of the case 202 and the outer circumferential surface 30a of the carrier 204. In this embodiment, the seal mechanism 50 is exposed to the external space A, but this configuration is not limitative. The seal mechanism 50 is disposed on the external space A side of the main bearings 206. Therefore, in the gap between the case 202 and the carrier 204, members are arranged from the external space A side toward the internal space V side along the rotation axis F0 in the order of the seal mechanism 50, the main bearing 206, the pin grooves 202b and the internal tooth pins 203, and the main bearing 206.

The seal mechanism 50 has the same configuration as described for the first embodiment. Accordingly, the seal mechanism 50 of this embodiment has the core 52, the garter spring 58, and the seal member 53, as shown in Figs. 3 and 6. The seal member 53 includes the base body portion 54, the seal lip portion 55, and the auxiliary lip portion 57. The seal mechanism 50 has the suction-increasing portion 56 formed on the outside sloping surface 512 located on the external space A side of the lip end 51 of the seal lip portion 55. The suction-increasing portion 56 has the forward rib regions 56r1, the reverse rib regions 56r2, and the inter-rib regions 56n. Each of the rib regions 56r has a plurality of ribs 56a spaced parallel to each other. Furthermore, appropriate settings are provided for the length and arrangement of the rib regions 56r relative to the lip end 51, the angle θ of the ribs 56a, the height of the ribs 56a along the radial direction, the seal width of the ribs 56a along the circumferential direction, and the tightening margin of the seal mechanism 50.

In this embodiment, the suction-increasing portion 56 is set so that when the circumferential speed of the outer circumferential surface 30a of the carrier 204 relative to the seal lip portion 55 is 70 mm/sec to 5000 mm/sec, the feed rate of fluid is 30 to 300 times as high as in the case where the suction-increasing portion 56 is not provided. More preferably, the suction-increasing portion 56 is set so that when the circumferential speed of the outer circumferential surface 30a of the carrier 204 relative to the seal lip portion 55 is 70 mm/sec to 1000 mm/sec, the feed rate of fluid is 30 to 200 times as high as in the case where the suction-increasing portion 56 is not provided.

In the transmission 100, the rotation speed in the relative rotation between the case 202 and the carrier 204 and the circumferential speed of the outer circumferential surface 30a of the carrier 204 are correlated. By way of an example, consider a case in which the case 202 serves as the fixed side and the carrier 204 serves as the output side that rotates relative to the case 202. In this case, the following is an example of the relationship between the rotation speed of the carrier 204 and the circumferential speed of the outer circumferential surface 30a of the carrier 204.

| Rotation Speed [rpm] | Circumferential speed [mm/sec] |
| --- | --- |
| 15 [rpm] | 74 [mm/sec] |
| 40 [rpm] | 197 [mm/sec] |
| 100 [rpm] | 492 [mm/sec] |
| 200 [rpm] | 984 [mm/sec] |

In transmission 100, the fluid feed rate was measured using a seal mechanism not provided with the suction-increasing potion 56. As a result, it was confirmed that the fluid feed rate was almost unchanged, irrespective of the rotation speed of the carrier 204. In contrast, the fluid feed rate [mL/h] was measured using the seal mechanism 50 with the suction-increasing portion 56. As a result, it was confirmed that as the rotation speed of the carrier 204 increases, the fluid feed rate in the seal mechanism 50 with the suction-increasing portion 56 also increases. Furthermore, it was confirmed that the increase of the fluid feed rate in the seal mechanism 50 with the suction-increasing portion 56 is exponential with respect to the increase of the rotation speed of the carrier 204, and that the fluid feed rate increases drastically with the increasing rotation speed. The fluid feed rate was within the range of 0.2 mUh to 30 mL/h.

Here, in the transmission 100, the values of the ratio of the fluid feed rate measured using the seal mechanism 50 with the suction-increasing portion 56 to the fluid feed rate measured using the seal mechanism not provided with the suction-increasing portion 56 were determined, so as to correspond to the rotation speed and the circumferential speed. These values of the ratio are shown below.

| Rotation Speed [rpm] | Circumferential speed [mm/sec] | Ratio |
| --- | --- | --- |
| 15 [rpm] | 74 [mm/sec] | 30 |
| 40 [rpm] | 197 [mm/sec] | 50 |
| 100 [rpm] | 492 mm/sec | 100 |
| 200 [rpm] | 984 [mm/sec] | 150 |

In addition, the temperature [°C] of the surface of the transmission 100 and the presence of oil leaking into the external space A were examined under these conditions. The results showed that the temperature may be higher than 60°C at circumferential speeds of 70 [mm/sec] or higher. It was also confirmed that no oil was leaking in any of the cases using the seal mechanism 50 with the suction-increasing portion 56.

In the transmission 100 of this embodiment, the fluid feed rate accomplished by the seal mechanism 50 can be increased even when the temperature rises during high-speed rotation at the circumferential speed of 70 mm/sec or higher. This inhibits the oil or other lubricant from leaking out of the internal space V of the transmission 100 toward the external space A. In other words, the sealing performance in the transmission 100 can be improved. This improvement of the sealing performance is less likely to be affected by temperature rise. Therefore, it is possible to maintain the sealing performance regardless of temperature changes in the transmission 100 caused by high speed rotation or other conditions.

Accordingly, this embodiment produces the same advantageous effects as the first embodiment. Furthermore, the presence of the ribs 56a improves the lip rigidity of the seal lip portion 55. Therefore, the seal resistance can be increased against attacks by sludge on the seal lip portion 55 and the outer circumferential surface 30a of the carrier 204. In addition, the smaller contact area of the seal lip portion 55 to the outer circumferential surface 30a of the carrier 204 reduces heat generation.

<Third Embodiment>

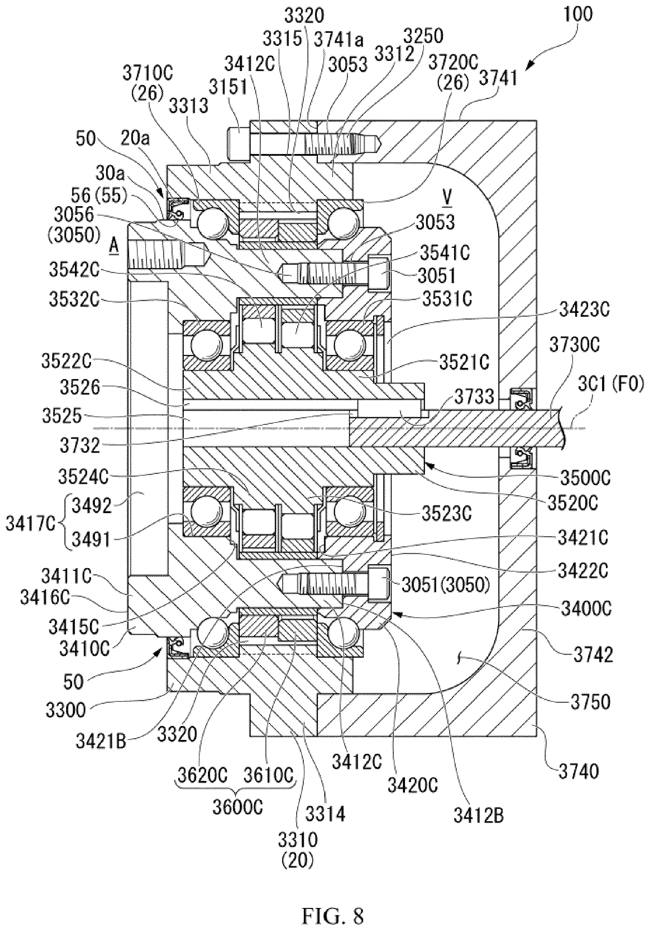

The following describes a transmission relating to a third embodiment of the invention with reference to the accompanying drawings. Fig. 8 is a sectional view showing the transmission relating to the embodiment.

As shown in Fig. 8, the transmission (speed reducer) 100 of the embodiment operates as a center-crank speed reducer. The transmission 100 includes a case (outer tube) 3310, an outer wall 3740, a carrier 3400C, a crankshaft assembly 3500C, a gear unit 3600C, two main bearings 3710C (26) and 3720C (26), an input gear 3730C, and the seal mechanism 50.

The output axis 3C1 corresponds to a central axis (rotation axis F0) of the two main bearings 3710C, 3720C and the input gear 3730C. The outer tube 3310 and the carrier 3400C are relatively rotatable about the rotation axis F0.

The driving force generated by a motor (not shown) or any other drive source (not shown) is inputted to the crankshaft assembly 3500C through the input gear 3730C extending along the output axis 3C1. The driving force inputted to the crankshaft assembly 3500C is transmitted to the gear unit 3600C disposed in an internal space surrounded by the outer tube 3310 and the carrier 3400C. The output axis 3C1 is the output axis from the motor and is also the input axis to the transmission 100. The two main bearings 3710C, 3720C are disposed in an annular space formed between the outer tube 3310 and the carrier 3400C. The outer tube 3310 or the carrier 3400C is rotatable about the output axis 3C1 by the driving force transmitted to the gear unit 3600C.

The carrier 3400C includes a base portion (first carrier) 3410C and an end plate (second carrier) 3420C. The carrier 3400C as a whole is shaped like a cylinder. The end plate 3420C has a substantially disc-like shape. The outer circumferential surface of the end plate 3420C is partially surrounded by a second cylindrical portion 3312 on the radially outer side. The main bearing 3720C is fitted into a ring-shaped gap between the second cylindrical portion 3312 and the circumferential surface of the end plate 3420C. The outer circumferential surface of the end plate 3420C is formed such that the rollers of the main bearing 3720C can roll directly on the end plate 3420C.

The base portion 3410C includes a base plate 3411C and a plurality of shaft portions 3412C. The outer circumferential surface of the base plate 3411C is partially surrounded by a third cylindrical portion 3313 on the radially outer side. The main bearing 3710C may be fitted into a ring-shaped gap between the third cylindrical portion 3313 and the outer circumferential surface of the base plate 3411C. The outer circumferential surface of the base plate 3411C is formed such that the rollers of the main bearing 3710C can roll directly on the outer circumferential surface of the base plate 3411C. The base plate 3411C is spaced apart from the end plate 3420C along the output axis 3C1. The base plate 3411C is coaxial with the end plate 3420C. Thus, the output axis 3C1 corresponds to the central axis of the base plate 3411C and the end plate 3420C.

The base plate 3411C includes an inner surface 3415C and an outer surface 3416C on the opposite side to the inner surface 3415C. The inner surface 3415C faces the gear unit 3600C in the axial direction. The inner surface 3415C and the outer surface 3416C are located to extend along an imaginary plane (not shown) orthogonal to the output axis 3C1. A central through hole 3417C is formed through the base plate 3411C. The central through hole 3417C extends between the inner surface 3415C and the outer surface 3416C along the output axis 3C1. The output axis 3C1 corresponds to the central axis of the central through hole 3417C.

The end plate 3420C includes an inner surface 3421C and an outer surface 3422C on the opposite side to the inner surface 3421C. The inner surface 3421C faces the gear unit 3600C in the axial direction. The inner surface 3421C and the outer surface 3422C are located to extend along an imaginary plane (not shown) orthogonal to the output axis 3C1. A central through hole 3423C is formed through the end plate 3420C. The central through hole 3423C extends between the inner surface 3421C and the outer surface 3422C along the output axis 3C1. The output axis 3C1 corresponds to the central axis of the central through hole 3423C.

Each of the plurality of shaft portions 3412C extends from the inner surface 3415C of the base plate 3411C toward the inner surface 3421C of the end plate 3420C. The end plate 3420C has a plurality of second junction surfaces 3421B connected to first junction surfaces 3412B located at the distal ends of the plurality of shaft portions 3412C. The end plate 3420C may be connected to the end surfaces of the plurality of shaft portion 3412C by a fastening portion 3050, which is constituted by an internally threaded portion 3056 and a bolt 3051 having an externally thread portion 3053, a positioning pin and the like. The first junction surfaces 3412B of the shaft portions 3412C and the second junction surfaces 3421B of the end plate 3420C are connected by bolts 3051 so as to be pressed against each other.

The gear unit 3600C is disposed between the inner surface 3415C of the base plate 3411C and the inner surface 3421C of the end plate 3420C. The shaft portions 3412C extend through the gear unit 3600C and are connected to the end plate 3420C. The gear unit 3600C includes two oscillating gears 3610C, 3620C. The oscillating gear 3610C is disposed between the end plate 3420C and the oscillating gear 3620C. The oscillating gear 3620C is disposed between the base plate 3411C and the oscillating gear 3610C.

The oscillating gears 3610C, 3620C may be formed based on a common design drawing. Each of the oscillating gears 3610C, 3620C may be a trochoidal gear or a cycloidal gear. The principle of this embodiment is not limited to a particular type of gears used as the oscillating gears 3610C, 3620C.

Each of the oscillating gears 3610C, 3620C is meshed with a plurality of internal tooth pins 3320. When the crankshaft assembly 3500C rotates about the output axis 3C1, the oscillating gears 3610C, 3620C perform circling movement (namely, oscillatory rotation) within a case 3310 while being meshed with the internal tooth pins 3320. During this movement, respective centers of the oscillating gears 3610C, 3620C circle about the output axis 3C1. Relative rotation between the outer tube 3310 and the carrier 3400C is caused by the oscillatory rotation of the oscillating gears 3610C, 3620C.

Each of the oscillating gears 3610C, 3620C has a through hole formed at the respective center. The crankshaft assembly 3500C is fitted into the through holes formed in the oscillating gears 3610C, 3620C. Each of the oscillating gears 3610C, 3620C has a plurality of through holes formed so as to correspond to the plurality of shaft portions 3412C disposed around the output axis 3C1. The plurality of shaft portions 3412C are inserted into these through holes, respectively. These through holes have such a size that no interference occurs between the plurality of shaft portions 3412C and the oscillating gears 3610C, 3620C.

The crankshaft assembly 3500C includes a crankshaft 3520C, two journal bearings 3531C, 3532C, and two crank bearings 3541C, 3542C. The crankshaft 3520C includes a first journal 3521C, a second journal 3522C, a first eccentric portion 3523C, and a second eccentric portion 3524C. The first journal 3521C extends along the output axis 3C1 and is inserted into the central through hole 3423C of the end plate 3420C. The second journal 3522C, which is disposed on the opposite side to the first journal 3521C, extends along the output axis 3C1 and is inserted into the central through hole 341 7C of the base plate 3411C.

The journal bearing 3531C is fitted into an annular space between the first journal 3521C and the inner wall of the central through hole 3423C formed in the end plate 3420C. As a result, the first journal 3521C is joined to the end plate 3420C. The journal bearing 3532C is fitted into an annular space between the second journal 3522C and the inner wall of the central through hole 3417C formed in the base plate 3411C. As a result, the second journal 3522C is joined to the base plate 3411C. In this manner, the carrier 3400C can support the crankshaft assembly 3500C.

The first eccentric portion 3523C is positioned between the first journal 3521C and the second eccentric portion 3524C. The second eccentric portion 3524C is positioned between the second journal 3522C and the first eccentric portion 3523C. The crank bearing 3541C is fitted into the through hole formed at the center of the oscillating gear 3610C and is joined to the first eccentric portion 3523C. As a result, the oscillating gear 3610C is mounted to the first eccentric portion 3523C. The crank bearing 3542C is fitted into the through hole formed at the center of the oscillating gear 3620C and is joined to the second eccentric portion 3524C. As a result, the oscillating gear 3620C is mounted to the second eccentric portion 3524C.

The first journal 3521C is coaxial with the second journal 3522C and rotates about the output axis 3C1. Each of the first and second eccentric portions 3523C and 3524C is formed in a columnar shape and positioned eccentrically from the output axis 3C1. The first eccentric portion 3523C and the second eccentric portion 3524C eccentrically rotate with respect to the output axis 3C1 and impart oscillatory rotation to the oscillating gears 3610C, 3620C, respectively. In this embodiment, one of the first and second eccentric portions 3523C and 3524C may be an example of the eccentric portion.

When the outer tube 3310 is fixed, since the oscillating gears 3610C and 3620C are meshed with the plurality of internal tooth pins 3320 of the outer tube 3310, the oscillatory rotation of the oscillating gears 3610C and 3620C is converted into circling motion of the crankshaft 3520C and rotation of the base plate 3411C about the output axis 3C1. The end plate 3420C and the base plate 3411C are joined to the first journal 3521C and the second journal 3522C, respectively, and thus circling motion of the crankshaft 3520C is converted into rotational motion of the end plate 3420C and the base plate 3411C about the output axis 3C1 via the shaft portions 3412C. The phase difference in the circling movement between the oscillating gears 3610C, 3620C is determined by a difference in eccentricity direction between the first eccentric portion 3523C and the second eccentric portion 3524C.

When the carrier 3400C is fixed, since the oscillating gears 3610C and 3620C are meshed with the plurality of internal tooth pins 3320 of the outer tube 3310, oscillatory rotation of the oscillating gears 3610C and 3620C is converted into rotational motion of the outer tube 3310 about the output axis 3C1. The input gear 3730C extends along the output axis 3C1 through a support wall 3742. The input gear 3730C extends through a space 3750 in the internal space V surrounded by the outer wall 3740. The crankshaft 3520C has a through hole 3525 extending along the output axis 3C1. The distal end portion of the input gear 3730C is inserted into the through hole 3525.

A key groove 3732 is formed at the distal end portion of the input gear 3730C. Another key groove 3526 is formed in the inner wall surface of the through hole 3525 formed in the crankshaft 3520C. The key grooves 3732, 3526 extend substantially parallel to the output axis 3C1. A key 3733 is inserted into the key grooves 3732, 3526. As a result, the input gear 3730C is joined to the crankshaft 3520C. When the input gear 3730C rotates about the output axis 3C1, the crankshaft 3520C rotates about the output axis 3C1. As a result, oscillatory rotation of the oscillating gears 3610C, 3620C occurs.

The central through hole 3417C formed through the base plate 3411C includes a first hollow portion 3491 and a second hollow portion 3492. The first hollow portion 3491 and the second hollow portion 3492 both have a circular cross section. The first hollow portion 3491 is smaller in cross section than the second hollow portion 3492. The second journal 3522C and the journal bearing 3532C are disposed in the first hollow portion 3491. The outer surface 3416C of the base plate 3411C is pressed against a mating member (not shown), irrespective of whether the mating member is the fixed side or the output side.

A flange portion 3314 is formed all around the periphery of the case 3310 and is connected to the outer wall 3740. The outer wall 3741 has a flat end 3741a. The end 3741a of the outer wall 3741 has internally threaded portions 3250, which serve as mounting-fastening portions 150. The flange portion 3314 has through holes 3315 that are located on the outer circumference of the case 3310 and extend through the flange portion 3314 along the rotation axis F0. The through holes 3315 are arranged at intervals in the circumferential direction.

The through holes 3315 serve as fastening holes penetrated by the bolts 3151 that fasten the transmission 100 and the outer wall 3740, which is a part of the component that is either the fixed side or the output side. The through holes 3315 are penetrated by the bolts 3151, which serve as fastening members. The internally threaded portions 3250 of the outer wall 3740 and the bolts 3151 constitute the mounting-fastening portions.

The internal space V that serves as a space surrounded by the outer wall 3740 and the case 3310 is sealed by the seal mechanism 50. The transmission 100 relating to the embodiment includes the seal mechanism 50 disposed between the case 3310 and the carrier 3400C at a position closest to the external space A. In other words, the portion of the annular gap between the case 3310 and the carrier 3400C positioned on the external space A side is sealed by the seal mechanism 50. The seal mechanism 50 seals between the internal space V and the external space A.

The seal mechanism 50 is disposed between the inner circumferential surface 20a of the case 3310 and the outer circumferential surface 30a of the carrier 3400C. The seal mechanism 50 is disposed to be exposed to the external space A, but this configuration is not limitative. The seal mechanism 50 is disposed on the external space A side of the main bearing 3710C. In the gap between the case 3310 and the carrier 3400C, members are arranged from the external space A side toward the internal space V side along the rotation axis F0 in the order of the seal mechanism 50, the main bearing 3710C, the internal tooth pins 3320, and the main bearing 3720C.

The seal mechanism 50 has the same configuration as described for the first embodiment. Accordingly, the seal mechanism 50 of this embodiment has the core 52, the garter spring 58, and the seal member 53, as shown in Figs. 3 and 8. The seal member 53 includes the base body portion 54, the seal lip portion 55, and the auxiliary lip portion 57. The seal mechanism 50 has the suction-increasing portion 56 formed on the outside sloping surface 512 located on the external space A side of the lip end 51 of the seal lip portion 55. The suction-increasing portion 56 has the forward rib regions 56r1, the reverse rib regions 56r2, and the inter-rib regions 56n. Each of the rib regions 56r has a plurality of ribs 56a spaced parallel to each other. Furthermore, appropriate settings are provided for the length and arrangement of the rib regions 56r relative to the lip end 51, the angle $\theta$ of the ribs 56a, the height of the ribs 56a in the radial direction, the seal width of the ribs 56a in the circumferential direction, and the tightening margin of the seal mechanism 50.

In this embodiment, the suction-increasing portion 56 is set so that when the circumferential speed of the outer circumferential surface 30a of the carrier 3400C relative to the seal lip portion 55 is 70 mm/sec to 5000 mm/sec, the feed rate of fluid is 30 to 300 times as high as in the case where the suction-increasing portion 56 is not provided. More preferably, the suction-increasing portion 56 is set so that when the circumferential speed of the outer circumferential surface 30a of the carrier 3400C relative to the seal lip portion 55 is 70 mm/sec to 1000 mm/sec, the feed rate of fluid is 30 to 200 times as high as in the case where the suction-increasing portion 56 is not provided.

The carrier 3400C of the transmission 100 in this embodiment accomplishes a larger number of rotations, or higher-speed rotation, than in the configuration described for the second embodiment.

In the transmission 100 of this embodiment, the fluid feed rate accomplished by the seal mechanism 50 can be increased even when the temperature rises during high-speed rotation at the circumferential speed of 70 mm/sec or higher. This inhibits the oil or other lubricant from leaking out of the internal space V of the transmission 100 toward the external space A. In other words, the sealing performance in the transmission 100 can be improved. This improvement of the sealing performance is less likely to be affected by temperature rise. Therefore, it is possible to maintain the sealing performance regardless of temperature changes in the transmission 100 caused by high speed rotation or other conditions.

Accordingly, this embodiment produces the same advantageous effects as the first and second embodiments. Furthermore, the presence of the ribs 56a improves the lip rigidity of the seal lip portion 55. Therefore, the seal resistance can be increased against attacks by sludge on the seal lip portion 55 and the outer circumferential surface 30a of the carrier 3400C. In addition, the smaller contact area of the seal lip portion 55 to the outer circumferential surface 30a of the carrier 3400C reduces heat generation.

In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

**LIST OF REFERENCE NUMBERS**

| | |
|---|---|
| 100 | transmission (speed reducer) |
| 20 | case |
| 20a | inner circumferential surface |
| 30 | carrier |
| 30a | outer circumferential surface |
| 50 | seal mechanism |

51      lip end
53      seal member
54      base body portion (fitting portion)
55      seal lip portion
56a     rib
56n     inter-rib region
56r     rib region
56r1    forward rib region (rib region)
56r2    reverse rib region (rib region)
57      auxiliary lip portion (dust lip portion)
58      garter spring (spring)
F0     rotation axis
A      external space
V      internal space

**Claims**

1. A transmission (100) comprising:

   a case (20);
   a carrier (30) housed inside the case (20) and configured to rotate relative to the case (20); and
   a seal mechanism (50) provided between the case (20) and the carrier (30),
   wherein the seal mechanism (50) includes a seal lip portion (55) having a lip end (51) for sealing, the lip end (51) being in linear contact with an outer circumferential surface (30a) of the carrier (30) along a circumferential direction of the carrier (30).

2. The transmission (100) of claim 1, wherein the seal mechanism (50) includes a suction-increasing portion (56), the suction-increasing portion (56) being configured to increase, in accordance with a circumferential speed of the carrier (30), a feed rate of fluid fed from an outside of the seal lip portion (55) toward an inside of the seal lip portion (55) through an interstice between the lip end (51) and the outer circumferential surface (30a) of the carrier (30).

3. The transmission (100) of claim 1, wherein the carrier (30) rotates relative to the case (20) such that a circumferential speed of the outer circumferential surface (30a) of the carrier (30) is 70 mm/sec or higher.

4. The transmission (100) of claim 2, wherein the suction-increasing portion (56) has a plurality of ribs (56a) extending from the lip end (51) toward an outside of the seal lip portion (55) along an axial direction of the carrier (30), so as to be inclined relative to the axial direction.

5. The transmission (100) of claim 4,

   wherein the suction-increasing portion (56) includes a plurality of rib regions (56r) arranged along a circumferential direction of the lip end (51), and
   wherein in the plurality of rib regions (56r), the plurality of ribs (56a) are disposed in parallel to each other along the circumferential direction of the lip end (51).

6. The transmission (100) of claim 5,
   wherein an axial dimension W of the plurality of rib regions (56r) along an axial direction of the carrier (30) satisfies a following condition:

$$W \geq \{(WR2-Wr2)/2\}/\tan\varphi$$

   where WR2 is an outer diameter of the outer circumferential surface (30a) of the carrier (30), Wr2 is an inner diameter of the seal lip portion (55), and $\varphi$ is a lip angle of the seal lip portion (55).

7. The transmission (100) of claim 5, wherein prior to assembly of the seal mechanism (50), the plurality of ribs (56a) protruding from the lip end (51) along a radial direction of the lip end (51) have a height of 0.01 mm to 0.10 mm, and the plurality of ribs (56a) have a width of 0.05 mm to 0.30 mm along the lip end (51).

8. The transmission (100) of claim 7, wherein at a position where the seal mechanism (50) is installed, a dimensional difference between an inner diameter of the case (20) and an outer diameter of the seal mechanism (50) before assembly is larger than 5% and smaller than 20% of an original width, or a radial dimension of the seal mechanism (50) before assembly.

9. The transmission (100) of claim 5, wherein for any two of the plurality of rib regions (56r) adjacent to each other in the circumferential direction of the lip end (51), the plurality of ribs (56a) are formed to be inclined in opposite directions.

10. The transmission (100) of claim 9,

   wherein the plurality of rib regions (56r) are spaced intermittently along the circumferential direction of the lip end (51), and
   wherein the suction-increasing portion (56) includes inter-rib regions (56n) disposed between any two of the plurality of rib regions (56r) adjacent to each other in the circumferential direction of the lip end (51), the inter-rib regions (56n) having no ribs.

11. The transmission (100) of claim 10, wherein a total of circumferential lengths of the plurality of rib regions (56r) is within a range of 30% to 80% of an entire length of the lip end (51) along the circumferential direction.

12. The transmission (100) of claim 4, wherein in the suction-increasing portion (56), the plurality of ribs (56a) have an inclination angle of 20° to 30°.

13. The transmission (100) of claim 11, wherein in the plurality of rib regions (56r), an interval between any two of the plurality of ribs (56a) adjacent to each other along the circumferential direction of the lip end (51) is within a range of 0.1 mm to 5 mm.

14. The transmission (100) of claim 2, wherein the suction-increasing portion (56) is set such that the feed rate of fluid is 0.2 mL/h to 30 mL/h.

15. A transmission (100) comprising:

   a case (202);
   an internal gear provided in the case (202) and having internal teeth (203);
   an oscillating gear (214, 216) having external teeth meshing with the internal teeth (203) of the internal gear, the oscillating gear being configured to be oscillatorily rotated;
   a crankshaft (210A) having an eccentric portion (210a, 210b) that rotatably supports the oscillating gear (214, 216), the crankshaft (210A) being configured to transmit a rotational force of a drive source to the oscillating gear (214, 216);
   a carrier (204) configured to receive the rotational force from the oscillating gear (214, 216) and rotate relative to the case (202); and
   a seal mechanism (50) provided between the case (202) and the carrier (204),
   wherein the seal mechanism (50) includes:

      a seal lip portion (55) having a lip end (51) for sealing, the lip end (51) being in linear contact with an outer circumferential surface (30a) of the carrier (204) along a circumferential direction of the carrier (204); and
      a suction-increasing portion (56) configured to increase a feed rate of fluid fed from an outside of the seal lip portion (55) toward an inside of the seal lip portion (55) through an interstice between the lip end (51) and the outer circumferential surface (30a) of the carrier (204),

   wherein the suction-increasing portion (56) includes:

      a plurality of ribs (56a) extending from the lip end (51) toward an outside of the seal lip portion (55) along an axial direction of the carrier (204), so as to be inclined relative to the axial direction; and
      forward rib regions (56r1), inter-rib regions (56n), and reverse rib regions (56r2) arranged along a circumferential direction of the lip end (51),

wherein in the forward rib regions (56r1) and the reverse rib regions (56r2), the plurality of ribs (56a) are arranged in parallel to each other along the circumferential direction of the lip end (51),

wherein for the forward rib regions (56r1) and the reverse rib regions (56r2), the plurality of ribs (56a) are formed to be inclined in opposite directions,

wherein the suction-increasing portion (56) rotates relative to the case (204) such that a circumferential speed of the outer circumferential surface (30a) of the carrier (204) is 70 mm/sec or higher, and

wherein the suction-increasing portion (56) is set such that the feed rate of fluid is 30 to 300 times as high as in a case where the suction-increasing portion (56) is not provided.

FIG. 1

FIG. 2

FIG. 3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015083329 A